# EUROPEAN PATENT APPLICATION

(11) **EP 2 975 569 A1**
(43) Date of publication of application: **20.01.2016**
(21) Application number: 15177338.9
(22) Date of filing: 17.07.2015
(51) Int. Cl.: G06Q 20/20, G06Q 30/06, G06Q 30/02

(54) **SERVER, APPARATUS AND PROGRAM FOR SALES DATA PROCESSING**

(30) Priority: 17.07.2014 JP 2014147155
(71) Applicant: Toshiba TEC Kabushiki Kaisha, Tokyo 141-0032 (JP)
(72) Inventor: SUGIYAMA, Koichi, Shinagawa-ku, Tokyo 141-0032 (JP); ARAI, Yasuhiro, Shinagawa-ku, Tokyo 141-0032 (JP)
(74) Representative: Takeuchi, Maya

(57) **Abstract**

According to an embodiment, there is provided a server which includes association means that associates and stores company specification information for specifying a company, electronic receipt specification information for specifying a reception destination for receiving electronic receipt information which relates to merchandise sales, and input privilege specification information for specifying a provision destination which is operated by a company and is for providing privilege for a customer, with each other, and transmission means that transmits the electronic receipt specification information and the privilege specification information which are associated with company specification information to a company server which relates a company specified by the company specification information.

## Description

### FIELD

Embodiments described herein relate generally to a server, a merchandise sales data processing apparatus, and a program.

### BACKGROUND

In the related art, a system of a receipt which is transferred to a customer who purchases merchandise from a store when the merchandise is settled, or an electronic receipt which means a receipt transferred electronically to a portable terminal and the like of a customer is known.

Using a receipt of an electronic data format in this manner allows, for example, the electronic receipt to be displayed on a display unit of a portable terminal which is held by a customer. In addition, a household account book is also allowed to be electronically and automatically subjected to book-keeping, and thus is beneficial to a customer. Since introducing a system of the electronic receipt allows consumption of a receipt sheet to be reduced, this is also beneficial to a store into which the system of the electronic receipt is introduced. The store specifies a customer by using a medium such as a portable terminal, and transmits an electronic receipt information to the specified customer.

A company which operates a store provides a service of providing privilege, for example, applying points, as a method for acquiring customers. Since the privilege service is provided for a member who performs contract with the company, the company specifies the customer by using a medium such as a point card, which is held by the member and then applies points to the specified customer.

However, in the related art, information for specifying a customer who receives an electronic receipt, and information for specifying a customer who receives the privilege service are not associated with each other. Thus, a customer is required to present a customer terminal such as a portable terminal when the customer receives an electronic receipt, and is required to present a membership medium such as a point card when a privilege service such as application of points is received.

An example of related art includes JP-A-2007-316750.

### DESCRIPTION OF THE DRAWINGS

FIG. 1 is a configuration diagram illustrating the entire configuration of an electronic receipt system according to an embodiment.
FIG. 2 is a transition diagram illustrating a display example of a screen in membership registration for a customer.
FIG. 3 is a block diagram illustrating main configuration of a POS terminal.
FIG. 4 is a block diagram illustrating main configuration of a store server.
FIG. 5 is a block diagram illustrating main configuration of a headquarter server.
FIG. 6 is a memory map illustrating a point master of the headquarter server.
FIG. 7 is a block diagram illustrating main configuration of an electronic receipt management server.
FIG. 8 is a diagram illustrating an example of an SRID which is stored in a storage unit of the electronic receipt management server.
FIG. 9 is a block diagram illustrating main configuration of a portable terminal.
FIG. 10 is a schematic diagram illustrating an example of receipt data.
FIG. 11 is a schematic diagram illustrating an example of an electronic receipt.
FIG. 12 is a functional block diagram of the POS terminal.
FIG. 13 is a flowchart illustrating a flow of control processing in the POS terminal.
FIG. 14 is a flowchart illustrating a flow of association processing in the POS terminal.
FIG. 15 is a flowchart illustrating a flow of membership ID inquiry processing in the POS terminal.
FIG. 16 is a flowchart illustrating a flow of PTID inquiry processing in the POS terminal.
FIG. 17 is a flowchart illustrating a flow of settlement processing in the POS terminal.
FIG. 18 is a flowchart illustrating a flow of card selection processing in the POS terminal.
FIG. 19 is a flowchart illustrating a flow of control processing in a store server.
FIG. 20 is a flowchart illustrating a flow of electronic receipt management processing and information transmission processing in the headquarter server.
FIG. 21 is a functional block diagram of an electronic receipt management server.
FIG. 22 is a flowchart illustrating a flow of management processing of electronic receipt information in the electronic receipt management server.
FIG. 23 is a flowchart illustrating a flow of electronic receipt reception processing and electronic receipt displaying processing in the portable terminal.

### DETAILED DESCRIPTION

An object of embodiments is to provide a server, a merchandise sales data processing apparatus, and a program which enables service in which information for specifying a reception destination at which an electronic receipt is received, and information for specifying a reception destination at which a privilege service is received are associated with each other.

In general, according to one embodiment, there is provided a server which includes association means and transmission means. The association means associates and stores input company specification information for specifying a company, input electronic receipt specification information for specifying a reception destination for receiving electronic receipt information which relates to merchandise sales, and input privilege specification information for specifying a provision destination which is operated by a company and is for providing privilege for a customer, with each other. The transmission means transmits the electronic receipt specification information and the privilege specification information which are associated with company specification information to a company server which relates to a company specified by the company specification information.

According to another embodiment, there is provided a merchandise sales data processing apparatus which includes specific information input means, first input means, instruction means, transmission means, first electronic receipt information transmission means, inquiry means, second input means, and privilege provision means. The specific information input means inputs electronic receipt specification information for specifying a reception destination for receiving electronic receipt information which relates to merchandise sales. The first input means inputs privilege specification information for specifying a provision destination which is for providing privilege for a customer and is operated by a company. The instruction means instructs association. The transmission means transmits electronic receipt specification information, privilege specification information, and company specification information to a server when an instruction from the instruction means is received, in order to generate association information by associating the electronic receipt specification information, the privilege specification information, and the company specification information for specifying the company. The first electronic receipt information transmission means generates the electronic receipt information and transmits the generated electronic receipt information along with the electronic receipt specification information to the server. The inquiry means inquires the privilege specification information in association with the electronic receipt specification information from a company server which relates to the company and stores the association information which is generated by the server, when the electronic receipt specification information is input after the association information is generated. The second input means inputs the privilege specification information from the company server for the inquiry. The privilege provision means provides the privilege to the provision destination which is specified by the privilege specification information which is input by the second input means. The privilege specification information may specify an application destination of points which are applied depending on an amount of sales money.

According to still another embodiment, there is provided a merchandise sales data processing apparatus which includes specific information input means, first input means, privilege provision means, instruction means, transmission means, inquiry means, third input means, and second electronic receipt information transmission means. The specific information input means inputs electronic receipt specification information for specifying a reception destination for receiving electronic receipt information which relates to merchandise sales. The first input means inputs privilege specification information for specifying a provision destination which is for providing privilege for a customer and is operated by a company. The privilege provision means provides the privilege to the provision destination which is specified by the privilege specification information which is input by the first input means. The instruction means instructs association. The transmission means transmits electronic receipt specification information, privilege specification information, and company specification information to a server when an instruction from the instruction means is received, in order to generate association information by associating the electronic receipt specification information, the privilege specification information, and the company specification information for specifying the company. The inquiry means inquires the electronic receipt specification information in association with the privilege specification information from a company server which relates to the company and stores the association information which is generated by the server, when the privilege specification information is input after the association information is generated. The third input means inputs the electronic receipt specification information from the company server in response to the inquiry. The second electronic receipt information transmission means generates the electronic receipt information and transmits the generated electronic receipt information along with the electronic receipt specification information which is input by the third input means, to the server.

According to still another embodiment, there is provided a program for causing a computer to function as association means and transmission means. The association means associates and stores input company specification information for specifying a company, input electronic receipt specification information for specifying a reception destination for receiving electronic receipt information which relates to merchandise sales, and input privilege specification information for specifying a provision destination which is operated by a company and is for providing privilege for a customer, with each other. The transmission means transmits the electronic receipt specification information and the privilege specification information which are associated with company specification information to a company server which relates to a company specified by the company specification information.

According to still another embodiment, there is provided a program for causing a computer to function as specific information input means, first input means, instruction means, transmission means, first electronic receipt information transmission means, inquiry means, second input means, and privilege provision means. The specific information input means inputs electronic receipt specification information for specifying a reception destination for receiving electronic receipt information which relates to merchandise sales. The first input means inputs privilege specification information for specifying a provision destination which is for providing privilege for a customer and is operated by a company. The instruction means instructs association. The transmission means transmits electronic receipt specification information, privilege specification information, and company specification information to a server when an instruction from the instruction means is received, in order to generate association information by associating the electronic receipt specification information, the privilege specification information, and the company specification information for specifying the company. The first electronic receipt information transmission means generates the electronic receipt information and transmits the generated electronic receipt information along with the electronic receipt specification information to the server. The inquiry means inquires the privilege specification information in association with the electronic receipt specification information from a company server which relates to the company and stores the association information which is generated by the server, when the electronic receipt specification information is input after the association information is generated. The second input means inputs the privilege specification information from the company server for the inquiry. The privilege provision means provides the privilege to the provision destination which is specified by the privilege specification information which is input by the second input means.

According to still another embodiment, there is provided a program for causing a computer to function as specific information input means, first input means, privilege provision means, instruction means, transmission means, inquiry means, third input means, and second electronic receipt information transmission means. The specific information input means inputs electronic receipt specification information for specifying a reception destination for receiving electronic receipt information which relates to merchandise sales. The first input means inputs privilege specification information for specifying a provision destination which is for providing privilege for a customer and is operated by a company. The privilege provision means provides the privilege to the provision destination which is specified by the privilege specification information which is input by the first input means. The instruction means instructs association. The transmission means transmits electronic receipt specification information, privilege specification information, and company specification information to a server when an instruction from the instruction means is received, in order to generate association information by associating the electronic receipt specification information, the privilege specification information, and the company specification information for specifying the company. The inquiry means inquires the electronic receipt specification information in association with the privilege specification information from a company server which relates to the company and stores the association information which is generated by the server, when the privilege specification information is input after the association information is generated. The third input means inputs the electronic receipt specification information from the company server in response to the inquiry. The second electronic receipt information transmission means generates the electronic receipt information and transmits the generated electronic receipt information along with the electronic receipt specification information which is input by the third input means, to the server.

Hereinafter, an embodiment will be described with reference to the accompanying drawings.

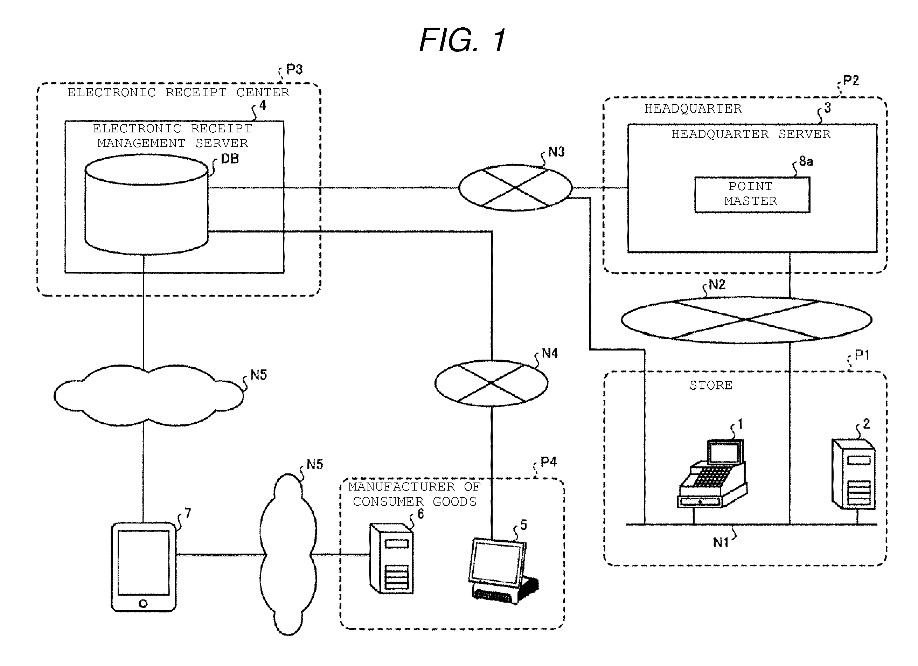

An embodiment will be described with reference to FIGS. 1 to 23. FIG. 1 is a configuration diagram illustrating the entire structure of an electronic receipt system according to an embodiment. As illustrated in FIG. 1, an electronic receipt system includes a point of sales (POS) terminal 1 which corresponds to a merchandise sales data processing apparatus, a store server 2 which corresponds to a company server, a headquarter server 3 which corresponds to a company server, an electronic receipt management server 4, a promotion setting terminal 5, a promotion management server 6, and a portable terminal 7 which is an example of a customer terminal for specifying a customer.

The POS terminal 1 and the store server 2 are provided in a store P1. The POS terminal 1 and the store server 2 are connected through a network N1 in the store such as a local area network (LAN), so as to enable communication with each other. The POS terminal 1 and the store server 2 may be connected to a network N2 which links the store P1 and a headquarter P2, through a network device (not illustrated) such as a router, which is connected to the network N1 in the store. The network N2 may be, for example, a dedicated line such as the Internet and a virtual private network (VPN).

The POS terminal 1 is a merchandise sales data processing apparatus which executes merchandise sales data processing. The POS terminal 1 generates receipt data which includes transaction details of merchandise to be settled, causes a printing unit 13 (which will be described later) to print the generated receipt information, and thus outputs a paper receipt. The POS terminal 1 outputs (transmits) electronic receipt information which is obtained by converting a data format of the receipt data, to the electronic receipt management server 4 through a network N3. A transmission method of the electronic receipt information is not particularly limited, and may use a general protocol such as HTTP and HTTPS. The network N3 may be, for example, a dedicated line such as the Internet and a virtual private network (VPN).

The store server 2 which corresponds to a company server integrally manages merchandise sales data processing and the like which are executed by the POS terminal 1. For example, the store server 2 stores and manages merchandise sales data which is generated through the merchandise sales data processing of the POS terminal 1, and the store server 2 stores and manages a merchandise data file which is used in the merchandise sales data processing.

In this embodiment, a configuration in which the POS terminal 1 outputs electronic receipt information will be described. However, it is not limited thereto and a configuration in which electronic receipt information is generated by the store server 2 or a conversion device (not illustrated) converts a data format of receipt data which is generated by the POS terminal 1, and the generated electronic receipt information is output to the electronic receipt management server 4 may be applied.

The headquarter server 3 which corresponds to a company server is provided in the headquarter P2 of a company which operates a store or chained stores (referred to as a store) and manages various information on a per company basis which operates a store.

The headquarter server 3 receives various information from the POS terminal 1 through the network N2. The headquarter server 3 has, for example, functions of sales management, sales analysis, inventory management, and the like of a company which operates a store.

The headquarter server 3 includes a point master 8a. The point master 8a receives, accumulates, stores, and manages point information of a customer which is generated by the POS terminal 1 in a store. The point master 8a stores and manages a point value (numeric value) which is currently allowed to be used by the customer for each PTID (which will be described later).

The electronic receipt management server 4 which corresponds to a server is provided in an electronic receipt center P3. The electronic receipt center P3 may be, for example, a third party organization other than a company which operates the headquarter server 3. A third party organization may manage the headquarter server 3.

The electronic receipt management server 4 functions as a receipt management server for a customer, which integrally manages pieces of electronic receipt information of various companies which operate stores. The electronic receipt management server 4 stores and manages membership data in a membership master which is held in a database DB. The membership data includes a name or a membership ID of a customer (member) which is subjected to membership registration (will be described later), and reception destination information of electronic receipt information. The membership ID corresponds to a customer code and specifies a reception destination of the electronic receipt information. A configuration in which a membership management server or the like is independent of the electronic receipt management server 4, and stores and manages the membership data may be provided.

The electronic receipt management server 4 receives electronic receipt information which is transmitted from the POS terminal 1, through the network N3, and stores and manages the received electronic receipt information in an electronic receipt management area 43a which is held in a database DB and will be described later. More specifically, the electronic receipt information includes components such as a membership ID in addition to transaction details of merchandise (merchandise sales data), and manages the components in correlation with membership data of the corresponding member.

The electronic receipt management server 4 receives additional information such as campaign information relating to specific merchandise campaign from a promotion setting terminal 5 which is connected to a network N4 (which will be described later), and stores and manages the received additional information in an additional information management area 43b which is held in the database DB and will be described later. More specifically, the additional information is managed in correlation with a component which satisfies a predetermined condition among components included in the electronic receipt information which is stored in the database DB.

When electronic receipt information is stored in the database DB, the electronic receipt management server 4 specifies a reception destination with reference to reception destination information which is correlated with a membership ID in this electronic receipt information. The reception destination information refers to a membership ID or a password. The electronic receipt management server 4 transmits electronic receipt information which is stored in the database DB, to a reception destination for the electronic receipt information through a network N5 (which will be described later). When additional information is correlated with the electronic receipt information, the additional information is also transmitted to the reception destination.

When an electronic receipt inquiry for designating a membership ID is received from the portable terminal 7 which is connected to the electronic receipt management server 4 through the network N5 (which will be described later), the electronic receipt management server 4 extracts electronic receipt information corresponding to the designated membership ID from the database DB, and the customer may display the electronic receipt information using the portable terminal 7 which is designated by the reception destination. When additional information is correlated with the electronic receipt information, the customer may also display this additional information using the portable terminal 7 which transmits the inquiry.

The electronic receipt management server 4 stores information (referred to as "SRID" below) which causes electronic receipt information which includes a membership ID for specifying a reception destination for receiving electronic receipt information to be displayed. An ID (referred to as "PTID" below) for specifying a point card which is issued by each company in order to apply points which correspond to privilege, is stored in the SRID. For this reason, a membership ID included in an SRID and a PTID stored in the SRID are associated with each other.

The electronic receipt management server 4 stores a membership master (not illustrated) for storing a result obtained by correlating a membership ID and a reception destination of electronic receipt information. For this reason, the membership master is searched for based on the membership ID included in an SRID and thus a reception destination of electronic receipt information corresponding to the member is specified.

The promotion setting terminal 5 and the promotion management server 6 are provided in manufacturer P4 of consumer goods and the like. The promotion setting terminal 5 corresponds to a terminal apparatus such as a personal computer (PC), and transmits additional information to the electronic receipt management server 4 through the network N4. The network N4 may be a dedicated line such as the Internet and a VPN, for example. A transmission method for the additional information is not particularly limited and may use a general protocol such as HTTP and HTTPS.

The portable terminal 7 is a terminal apparatus which is used by a user (customer) of this system, such as a smart phone, a mobile phone, a personal digital assistant (PDA), and a tablet computer, for example. The portable terminal 7 has an installed application for displaying various information provided over the network N5, such as a web browser. A terminal apparatus of a PC and the like may be applied instead of the portable terminal 7.

The portable terminal 7 accesses the electronic receipt management server 4 through the network N5, and thus performs membership registration in this system. The network N5 may be the Internet or various public networks.

The membership registration of a customer in this system is performed through the following procedures, for example. A customer transmits a blank mail from the portable terminal 7 to the electronic receipt management server 4 through the network N5. The electronic receipt management server 4 transmits a Uniform Resource Locator (URL) indicating a page for membership registration to a mail address of the received mail. The customer accesses the URL indicating a page for membership registration through the portable terminal 7 and causes an input screen to be displayed. The input screen is for inputting necessary items (name, transmission destination information, and the like) for membership registration. After the customer completes to input necessary items, the electronic receipt management server 4 performs membership registration on the membership master. Then, the electronic receipt management server 4 delivers a membership registration completion mail including a membership ID and a password to the portable terminal 7. Accordingly, the membership registration is ended.

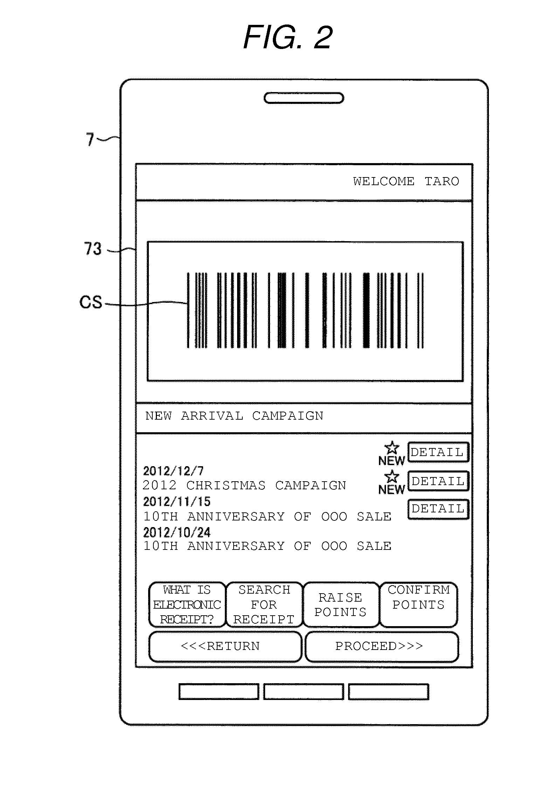

If the above-described membership registration is ended, the portable terminal 7 displays a code symbol CS such as a barcode and a two-dimensional code, which includes a membership ID on a display unit 73, as illustrated in FIG. 2.

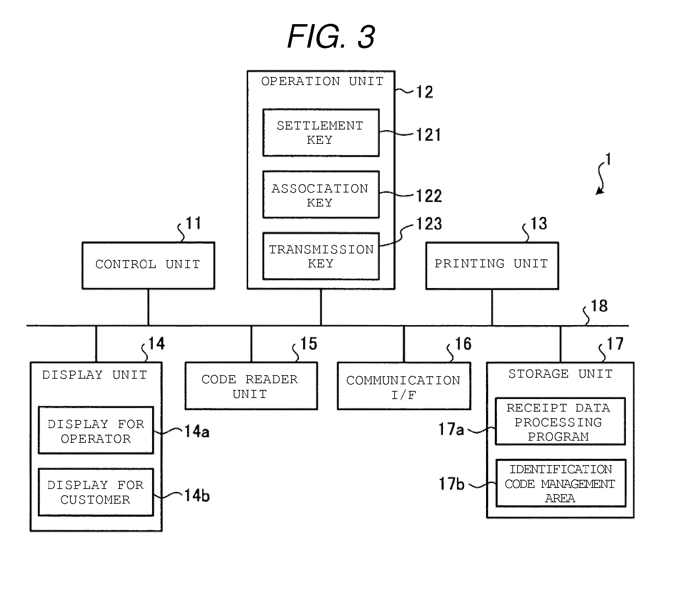

The customer presents the code symbol CS which is displayed in the portable terminal 7, to a salesperson in the store P1 when a transaction is settled. The salesperson causes a code reader unit 15 (see FIG. 3) which is connected to the POS terminal 1 and includes, for example, a scanner to read the code symbol CS which is displayed in the portable terminal 7. Accordingly, a membership ID of a customer may be correlated with electronic receipt information which is generated in the POS terminal 1 through the merchandise sales data processing after settlement.

The customer may view electronic receipt information of the corresponding transaction which is transmitted from the electronic receipt management server 4 by using the portable terminal 7 through the network N5 after settlement

(transaction) in the POS terminal 1. The portable terminal 7 transmits a membership ID to the electronic receipt management server 4 through the network N5. The portable terminal 7 receives electronic receipt information of the corresponding member from the electronic receipt management server 4 and displays the received electronic receipt information on the display unit 73.

In the electronic receipt system having a related configuration, electronic receipt information indicating details of a transaction (settlement), which is generated through the merchandise sales data processing executed by the POS terminal 1 of the store P1 is transmitted to the electronic receipt management server 4 from the POS terminal 1. The transmitted electronic receipt information is opened to the public over the web. Accordingly, the portable terminal 7 having an installed web browser designates a uniform resource locator (URL), and thus may download the electronic receipt information which is opened to the public over the web to the portable terminal 7 and display the downloaded electronic receipt information with the web browser. An application for displaying electronic receipt information may be installed on the portable terminal 7, and displaying may be performed.

Next, configurations of main apparatuses for configuring the electronic receipt system according to this embodiment will be described.

First, the POS terminal 1 which corresponds to the merchandise sales data processing apparatus will be described. FIG. 3 is a block diagram illustrating a configuration of the POS terminal 1. As illustrated in FIG. 3, the POS terminal 1 includes a control unit 11 which generally controls various computations or each unit of the POS terminal 1. The control unit 11 is a computer which includes a central processing unit (CPU), a read only memory (ROM), a random access memory (RAM), a real time clock (RTC) unit, and the like. The ROM stores various programs or data. The RAM stores various programs temporarily or stores various data so as to be rewritable. The RTC unit clocks the current date and time.

The control unit 11 is connected to an operation unit 12, the printing unit 13, a display unit 14, and the code reader unit 15 through a bus 18.

The operation unit 12 has various operation keys in order for an operator to perform an operation and an input. As the operation keys, a numeric key for inputting a numerical value, a cursor key or a selection and determination key for selecting a predetermined item, a subtotal key for instructing an output of summation of merchandise of which sales registration is performed in a transaction, a settlement key for declaring settlement of a price by executing settlement processing of one transaction and the like, for example.

The operation unit 12 includes a keyboard in which keys of a settlement key 121, an association key 122, a transmission key 123, and the like are arranged. The settlement key 121 is a key which is operated when a transaction with a customer is ended. The association key 122 is a key which is operated when a membership ID and a PTID are input in order to associate the membership ID and the PTID with each other. In this embodiment, the membership ID is stored in the portable terminal 7 (customer terminal) which is held by the customer. The PTID is stored in a point card (membership medium) which is held by the customer.

The transmission key 123 is a key which is operated when the membership ID and the PTID which are input are transmitted to the electronic receipt management server 4.

The printing unit 13 includes a printer device of printing a receipt, a journal, or the like. The printing unit 13 performs printing on roll sheet which is transferred by a thermal head having a heating element, for example, and then issues the receipt by cutting the sheet out.

The display unit 14 is, for example, a liquid crystal display, or the like, and displays various information regarding the name and a price of merchandise registered for sales, a total amount of money and an amount of change in one transaction in which settlement is declared, and the like. The display unit 14 includes a display for an operator 14a which displays various information only for a cashier and a display for a customer 14b which displays various information only for a customer. The display unit 14 may have a configuration of a touch panel. In this case, the touch panel functions as the operation unit 12.

The code reader unit 15 is a scanner device for optically reading a code symbol such as a bar code and a two-dimensional code, for example. The code reader unit 15 reads, for example, a code symbol which is attached to merchandise or a code symbol which is displayed in the portable terminal 7, and the like. The control unit 11 inputs information held in the read code symbol. The code symbol which is attached to merchandise holds a merchandise code and the like for specifying the merchandise. The code symbol which is displayed in the portable terminal 7 holds a membership ID and the like for specifying a customer which holds the portable terminal 7. The membership ID may be stored magnetically or electrically in the portable terminal 7. In this case, a dedicated reading apparatus reads the stored membership ID. The control unit 11 inputs the read membership ID.

The control unit 11 is connected to a communication I/F (interface) 16 through the bus 18, and may be connected to the network N1, the network N2, or the network N3 in a store through the communication I/F 16.

The control unit 11 is connected to a storage unit 17 through the bus 18. The storage unit 17 is an auxiliary storage device such as a hard disk drive (HDD) and a solid state drive (SSD), for example. The storage unit 17 stores a program for performing various POS businesses including the merchandise sales data processing. The storage unit 17 stores various data files relating to the merchandise sales data processing, such as a merchandise data file. The merchandise data file stores merchandise data of a merchandise name, a merchandise code, a unit price, and the like of merchandise. The storage unit 17 stores a receipt data processing program 17a for executing merchandise sales processing or processing relating to electronic receipt information.

The storage unit 17 stores a POS number for distinguishing the own POS terminal 1 from other POS terminals 1, a company code (identification code for specifying a company which operates a store), a business type and business category code, a store code indicating the store P1 in which the POS terminal 1 is installed, and the like, in an identification code management area 17b. The business type and business category code is, for example, a code (classification code) for identifying a business type and a business category of a store as a convenience store, a supermarket, a department store, a pharmacy, a restaurant, an eating house, and the like. Such a business type and business category may be arbitrarily changed in accordance with preference of a user. The company code, and the business type and business category code may be registered in the store server 2 or the headquarter server 3.

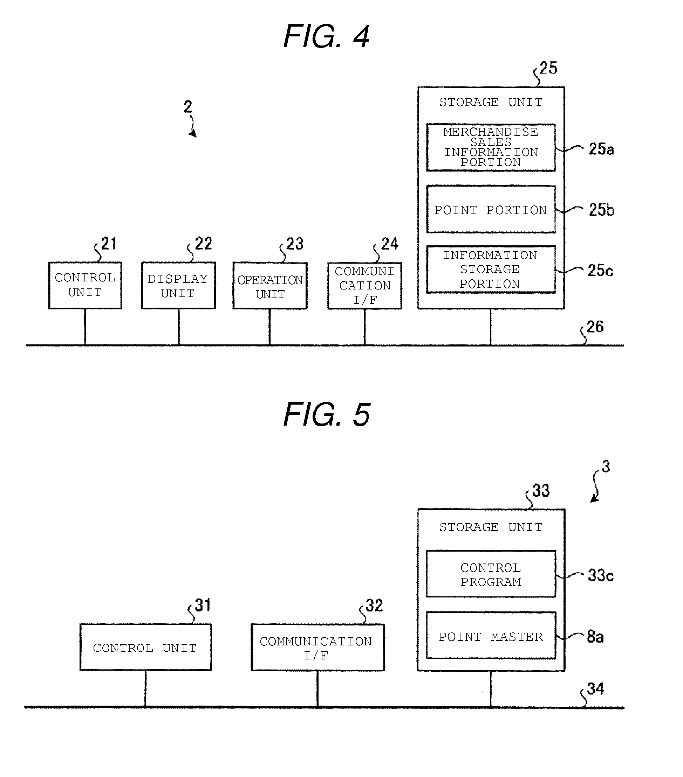

Next, a configuration of the store server 2 will be described with reference to FIG. 4. The store server 2 includes a control unit 21 which generally controls various computations or each unit of the store server 2. The control unit 21 is a computer which includes a CPU, a ROM, a RAM, an RTC unit, and the like. The ROM stores various programs or data. The RAM stores various programs temporarily or stores various data so as to be rewritable. The RTC unit clocks the current date and time.

The control unit 21 may be connected to the network N1 and the network N2 in the store through a communication I/F 24 which is connected to a bus 26. The control unit 21 is connected to a display unit 22, an operation unit 23, and a storage unit 25 through the bus 26. The display unit 22 displays various information.

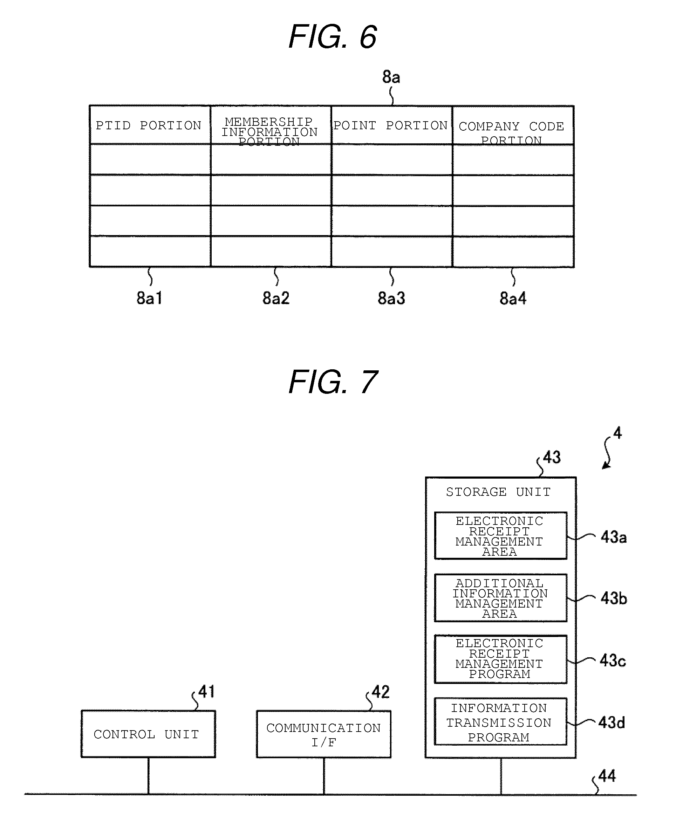

The storage unit 25 includes a merchandise sales information portion 25a in which merchandise sales information of a store P1 is stored, a point portion 25b in which an SRID including a membership ID and a PTID which are transmitted from the headquarter server 3 and are associated with each other is stored, and an information storage portion 25c in which various information which are transmitted from the headquarter server 3 are stored. In the storage unit 25, a control program for controlling the store server is stored. An SRID of a company in which the headquarter server 3 is installed among SRIDs (that is, the SRID illustrated in FIG. 7) which are stored in the electronic receipt management area 43a of the electronic receipt management server 4 is transmitted through the headquarter server 3 and stored in the point portion 25b.

Next, a hardware configuration of the headquarter server 3 which functions as the server for a company will be described with reference to a block diagram in FIG. 5. The headquarter server 3 includes a control unit 31 which generally controls various computations or points which are generated in stores. The control unit 31 is a computer which includes a CPU, a ROM, a RAM, an RTC unit, and the like. The ROM stores various programs or data. The RAM stores various programs temporarily or stores various data so as to be rewritable. The RTC unit clocks the current date and time.

The control unit 31 includes a communication I/F 32 which is connected to a bus 34 and may be connected to the network N2 or the network N3 through the communication I/F 32. The control unit 31 is connected to a storage unit 33 through the bus 34.

The storage unit 33 includes a point master 8a in which a point value which is generated based on settlement information of merchandise which is sold is stored on a per PTID basis.

FIG. 6 is a memory map indicating the point master 8a. In FIG. 6, the point master 8a includes a PTID portion 8a1, a membership information portion 8a2, a point portion 8a3, and a company code portion 8a4. In the PTID portion 8a1, privilege specification information for specifying a point card which is held by a member who will get corresponding points is stored. In the membership information portion 8a2, various information (name, address, age, gender, family structure, and the like) of the member are stored. In the point portion 8a3, a point value (numeric value) which is currently accumulated as a result of using the point card is stored. In the company code portion 8a4, a company code of a company which issues a point card which is specified through the PTID is stored.

Next, a configuration of the electronic receipt management server 4 which functions as the receipt management server for a customer will be described with reference to a block diagram in FIG. 7. As illustrated in FIG. 7, the electronic receipt management server 4 includes a control unit 41 which generally controls various computations or each unit of the electronic receipt management server 4. The control unit 41 is a computer which includes a CPU, a ROM, a RAM, an RTC unit, and the like. The ROM stores various programs or data. The RAM stores various programs temporarily or stores various data so as to be rewritable. The RTC unit clocks the current date and time.

The control unit 41 may be connected to the network N3, the network N4, and the network N5 through a communication I/F 42 which is connected to a bus 44. The control unit 41 is connected to a storage unit 43 through the bus 44.

An electronic receipt management area 43a for integrally storing pieces of electronic receipt information of various companies which operate stores is secured in the storage unit 43 in addition to a membership master management area (not illustrated) for storing and managing the membership master. More specifically, the electronic receipt management area 43a manages pieces of electronic receipt information of various companies which operate stores, on a per member basis.

The electronic receipt information includes a membership ID, a company code, a store code, a POS number of the POS terminal 1, a receipt number, merchandise sales data (including merchandise code, and data of date and time), and the like. Accordingly, for example, a manufacturer P4 of consumer goods, and the like may obtain unique certification information of purchased merchandise which is associated with the manufacturer from the electronic receipt information under a specific condition (for example, limitation to a specific company which operates a store, limitation to a specific district, limitation to a specific time, and the like). The manufacturer P4 of consumer goods refers to a manufacturer of a food, a beverage, clothing, cosmetics, a medicine, household goods, and the like.

The storage unit 43 stores various additional information which are correlated with desired merchandise (merchandise code), a member (membership ID), a company (company code), and a store (store code) in an additional information management area 43b. The additional information refers to campaign information and the like regarding a campaign which is correlated with merchandise information of desired merchandise and a specific condition (for example, a specific company which operates a store, a specific district, a specific store, a specific time, and the like). The additional information includes, for example, access information such as an URL for performing a link to a homepage which is associated with a campaign of a company, an URL for performing a link to a homepage which is associated with a CM of a company, and an URL for performing a link to a coupon of a company.

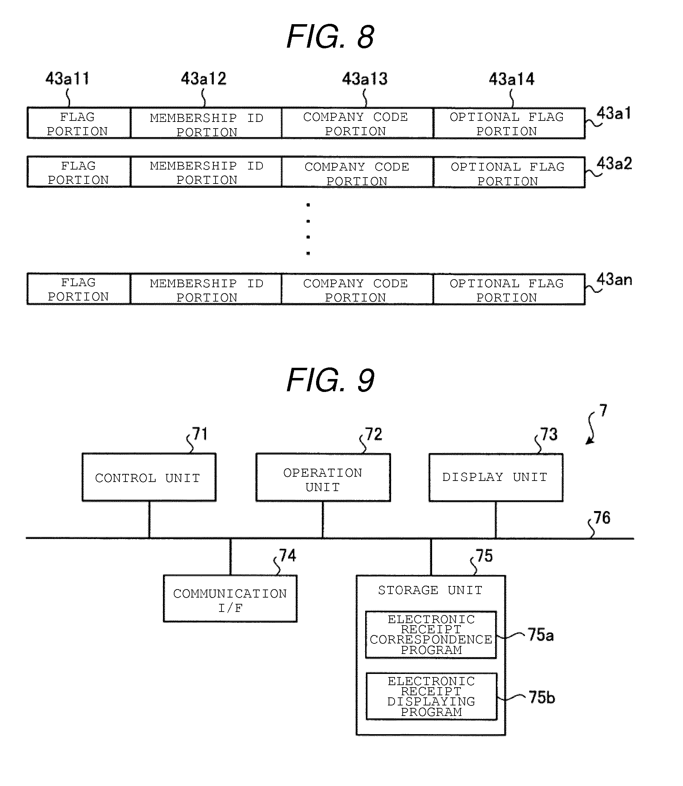

The storage unit 43 stores an electronic receipt management program 43c for managing electronic receipt information and additional information of each company in an electronic receipt management area 43a and an additional information management area 43b, in addition to a membership management program (not illustrated) for managing the membership master in a membership master area. The electronic receipt management program 43c has a function to transmit an SRID illustrated in FIG. 8 to the headquarter server 3 of each company. The storage unit 43 stores an information transmission program 43d for transmitting electronic receipt information and additional information of desired merchandise to the portable terminal 7.

Next, the SRID (association information) which is stored in the electronic receipt management area 43a of the electronic receipt management server 4 will be described with reference to FIG. 8.

In FIG. 8, the electronic receipt management area 43a includes SRIDs 43a1 to 43an. For example, the SRID 43a1 includes a flag portion 43a11, a membership ID portion 43a12, a company code portion 43a13, and an optional flag portion 43a14.

In the flag portion 43a11, a figure of "99" which indicates that the SRID 43a1 refers to an SRID is stored. In the membership ID portion 43a12, a membership ID which is applied when membership registration is performed, and is used for specifying a member is stored. In the company code portion 43a13, a company code for specifying a company which issues a point card is stored. In the optional flag portion 43a14, any information may be stored, and, for example, a PTID of a point card which is issued by a company which is specified through the company code portion 43a13 is stored.

Similarly, the SRID 43a2 includes a flag portion 43a21, a membership ID portion 43a22, a company code portion 43a23, and an optional flag portion 43a24. The SRID 43an includes a flag portion 43an1, a membership ID portion 43an2, a company code portion 43an3, and an optional flag portion 43an4.

When a new PTID which is different from the stored PTID is input regarding the SRID of the same company, the input PTID is overwritten and stored in the corresponding optional flag portion 43a14.

Next, a configuration of the portable terminal 7 will be described with reference to a block diagram in FIG. 9. As illustrated in FIG. 9, the portable terminal 7 includes a control unit 71 which generally controls various computations or each unit of the portable terminal 7. The control unit 71 is a computer which includes a CPU, a ROM, a RAM, an RTC unit, and the like. The ROM stores various programs or data. The RAM stores various programs temporarily or stores various data so as to be rewritable. The RTC unit clocks the current date and time.

An operation unit 72 is connected to a display unit 73 through a bus 76. The operation unit 72 has various operation keys or a pointing device for a user (customer) performing an operation and an input. The display unit 73 is a liquid crystal display, for example. The display unit 73 displays various information such as electronic receipt information which will be described later. The display unit 73 may have a configuration of a touch panel. In this case, the touch panel functions as the operation unit 72.

The control unit 71 is connected to a communication I/F 74 through the bus 76, and may be connected to the network N5 through the communication I/F 74. A configuration in which the control unit 71 is enabled to be connected to the network N1 in a store through the communication I/F 74 may be made.

The control unit 71 is connected to a storage unit 75 through the bus 76. The storage unit 75 stores an electronic receipt correspondence program 75a for receiving electronic receipt information from the electronic receipt management server 4, and an electronic receipt displaying program 75b for displaying the received electronic receipt information in addition to a web browser for displaying various information (contents) which are opened to the public over a web.

Next, control processing of each unit which configures the system according to this embodiment will be described.

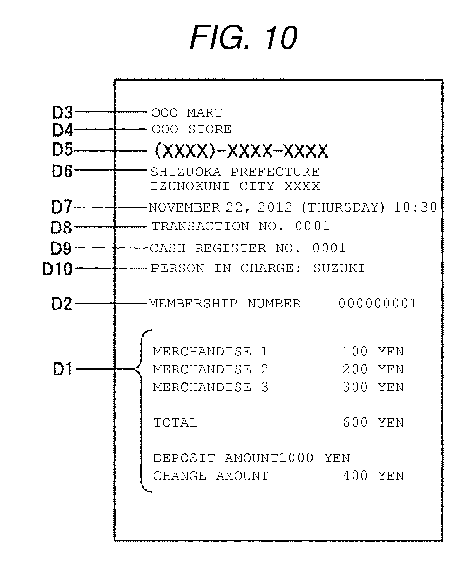

First, electronic receipt processing will be described with reference to FIGS. 10 to 18. The control unit 11 of the POS terminal 1 is operated with the receipt data processing program 17a, whereby the electronic receipt processing is executed.

FIG. 10 is a schematic diagram illustrating an example of receipt data. The receipt data is text data and the like in the non-structured format, and is used in printing in the printing unit 13. As illustrated in FIG. 10, the receipt data includes components of merchandise sales data D1 and a membership ID D2 which are described above. The merchandise sales data D1 includes a merchandise name (merchandise code) of merchandise which is a target of settlement, and an amount of money of the merchandise, a summation amount of money of merchandise, a deposit amount which is paid by a customer, a change amount, and the like.

The receipt data includes components of a company code (company name) D3 indicating a company which operates a store, a store code (store name) D4, a telephone number D5 and an address D6 of the store, the transaction date and time D7, a transaction number (receipt number) D8, a cash register number D9, a name of a person in charge D10, and the like. The components included in the receipt data are not limited to an example in FIG. 10, and may include other components such as a business type and business category code, or may exclude the components of the telephone number D5, the address D6, or the like.

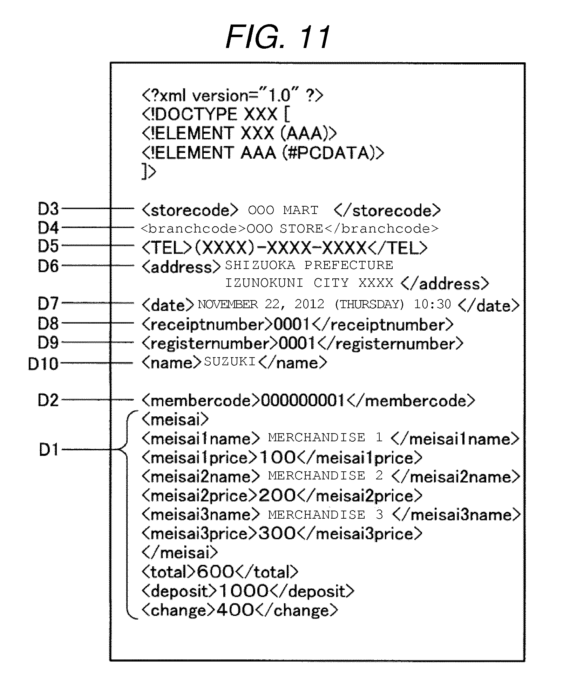

FIG. 11 is a schematic diagram illustrating an example of electronic receipt information. As illustrated in FIG. 11, the electronic receipt information includes data (structured document) of a structured format such as an XML and a CSV. FIG. 11 illustrates an example in which each component (D1 to D10) of the receipt data illustrated in FIG. 10 is converted to a component of an XML format.

Receipt data is converted into electronic receipt information based on a conversion rule described in the receipt data schema (not illustrated). Specifically, a predetermined component which configures receipt data and attribute information (tag and the like) indicating an attribute of the component are defined in the receipt data schema. The control unit 11 generates electronic receipt information of the structured format as illustrated in FIG. 11 by causing each component of receipt data to be structured using attribute information which corresponds to each component. It is possible to efficiently use components included in electronic receipt information by generating the electronic receipt information of the structured format in this manner, and thus it is possible to obtain various advantages in data management.

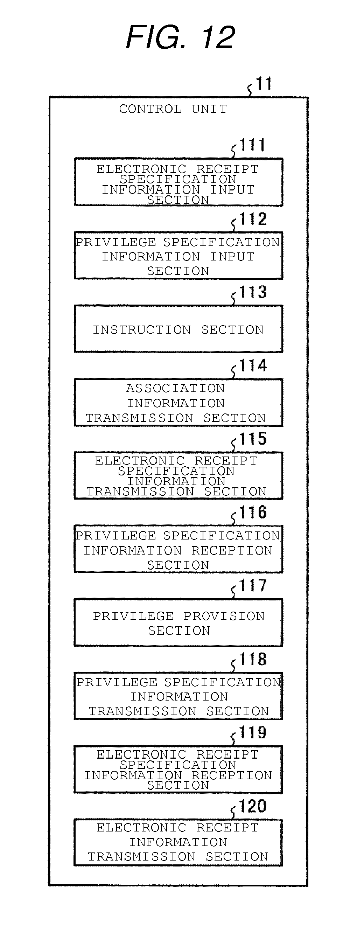

FIG. 12 is a functional block diagram for processing which is executed by the control unit 11 of the POS terminal 1 being operated with the receipt data processing program 17a. The control unit 11 reads and executes the receipt data processing program 17a from the storage unit 17, and thus an electronic receipt specification information input section 111, a privilege specification information input section 112, an instruction section 113, an association information transmission section 114, an electronic receipt specification information transmission section 115, a privilege specification information reception section 116, a privilege provision section 117, a privilege specification information transmission section 118, an electronic receipt specification information reception section 119, and an electronic receipt information transmission section 120 are performed.

The electronic receipt specification information input section 111 has a function to input electronic receipt specification information (membership ID) for specifying a reception destination of electronic receipt information relating to merchandise sales.

The privilege specification information input section 112 has a function to input privilege specification information (PTID) for specifying a reception destination of a privilege service relating to merchandise sales.

The instruction section 113 has a function to instruct association.

The association information transmission section 114 has a function to transmit instruction information for instructing association, electronic receipt specification information (membership ID), privilege specification information (PTID), and company specification information (company code) as a series of data to a server (electronic receipt management server 4) when an instruction from the instruction section 113 is received, in order to generate association information (SRID) which is obtained by associating the electronic receipt specification information (membership ID), the privilege specification information (PTID), and the company specification information (company code) for specifying a company, with each other.

The electronic receipt specification information transmission section 115 has a function to transmit the electronic receipt specification information (membership ID) to a company server (store server 2 or headquarter server 3) which stores the association information (SRID) which is generated by the server (electronic receipt management server 4), when the electronic receipt specification information (membership ID) is input by the electronic receipt specification information input section 111.

The privilege specification information reception section 116 has a function to receive the privilege specification information (PTID) from the company server (store server 2 or headquarter server 3).

The privilege provision section 117 has a function to provide privilege to a reception destination which is specified by the privilege specification information (PTID) which is received by the privilege specification information reception section 116.

The privilege specification information transmission section 118 has a function to transmit privilege specification information (PTID) to the company server (store server 2 or headquarter server 3) which stores the association information (SRID) which is generated by the server (electronic receipt management server 4), when the privilege specification information (PTID) is input by the privilege specification information input section 112.

The electronic receipt specification information reception section 119 has a function to receive the electronic receipt specification information (membership ID) from the company server (store server 2 or headquarter server 3).

The electronic receipt information transmission section 120 has a function to generate electronic receipt information in association with the electronic receipt specification information (membership ID) which is received by the electronic receipt specification information reception section 119, and to transmit the generated electronic receipt information.

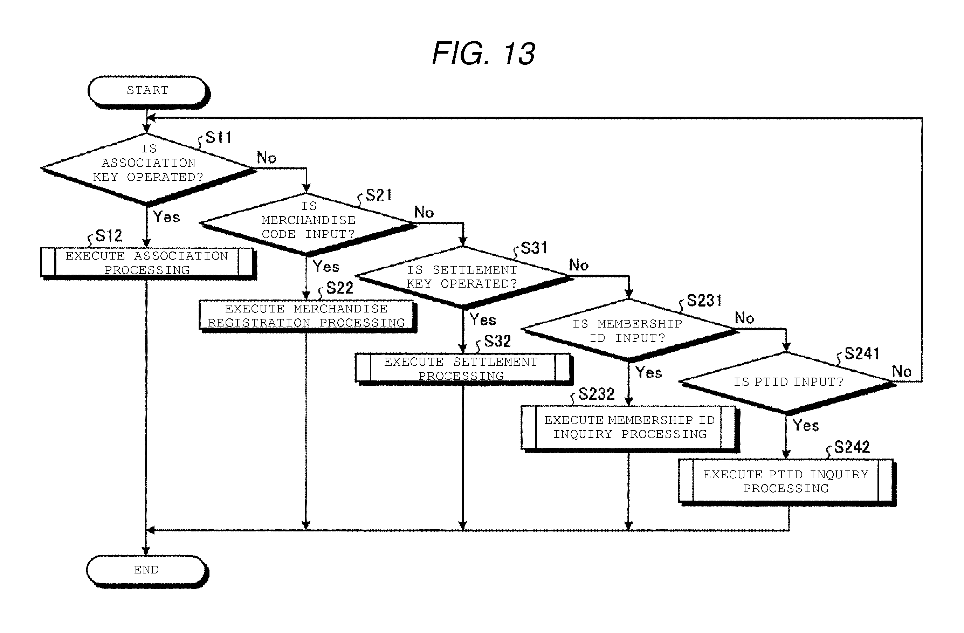

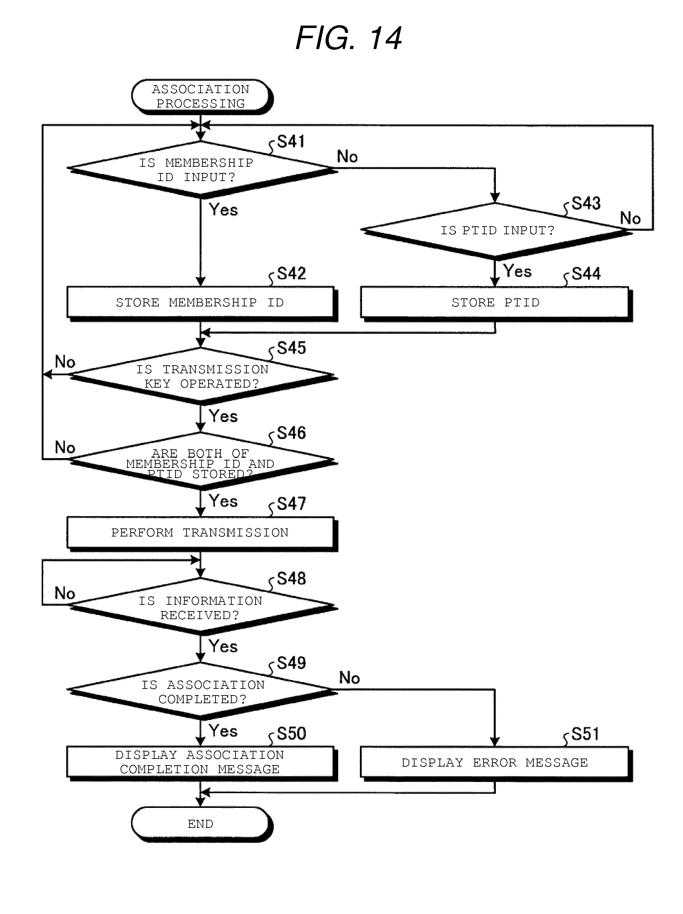

FIG. 13 is a flowchart illustrating a flow of processing in the POS terminal 1. First, the control unit 11 (instruction section 113) of the POS terminal 1 determines whether or not the association key 122 is operated (Step S11). When it is determined to be operated (Yes in Step S11), the control unit 11 executes association processing of a membership ID and a PTID with each other, which is illustrated in FIG. 14 (Step S12).

When it is determined that the association key 122 is not operated (No in Step S11), the control unit 11 determines whether or not a merchandise code which is included in a code symbol added to merchandise is read and input by the code reader unit 15 (Step S21). When it is determined that the merchandise code is input (Yes in Step S21), the control unit 11 executes merchandise registration processing based on the merchandise code (Step S22).

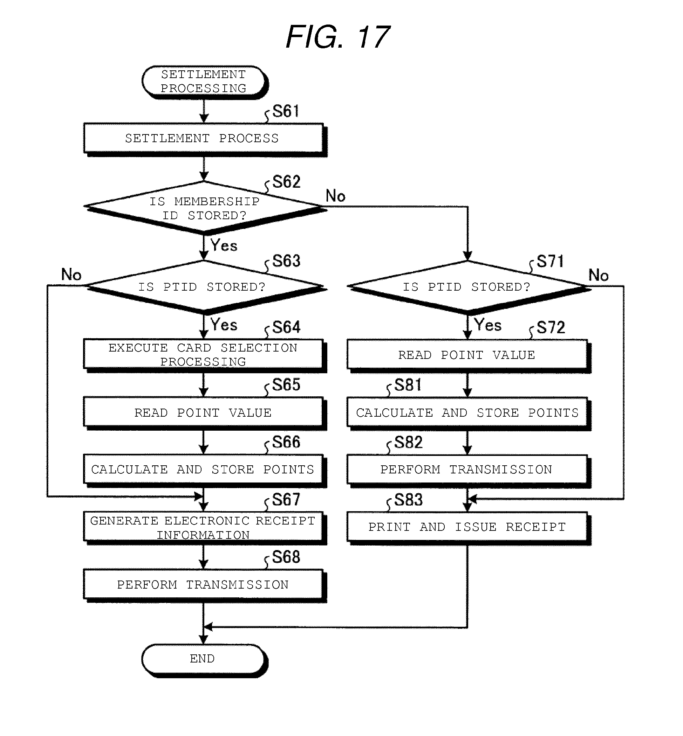

When it is determined that the merchandise code is not input (No in Step S21), the control unit 11 determines whether or not the settlement key 121 is operated (Step S31). When it is determined to be operated (Yes in Step S31), the control unit 11 executes settlement processing in FIG. 17 (Step S32).

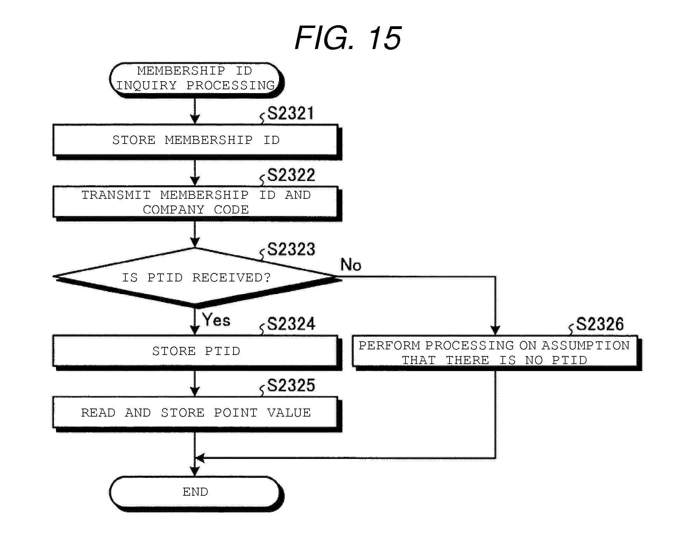

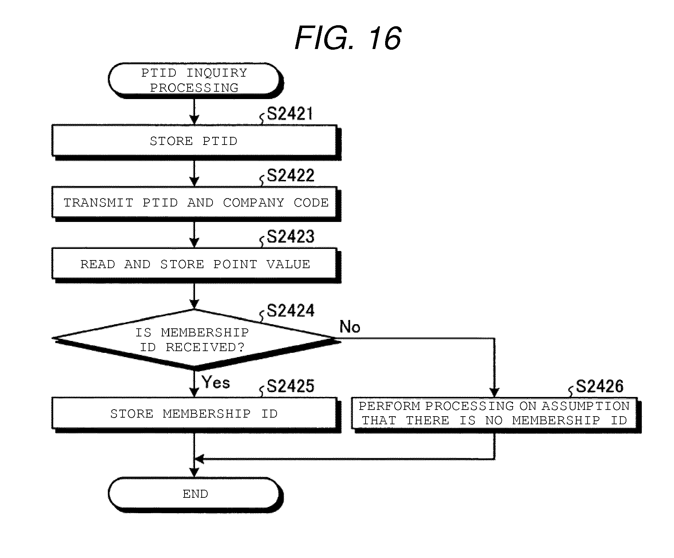

When it is determined that the settlement key 121 is not operated (No in Step S31), the control unit 11 determines whether or not the membership ID is input (Step S231). When it is determined to be input (Yes in Step S231), the control unit 11 executes membership ID inquiry processing in FIG. 15 (Step S232). When it is determined that the membership ID is not input (No in Step S231), the control unit 11 determines whether or not the PTID is input (Step S241). When it is determined to be input (Yes in Step S241), the control unit 11 executes PTID inquiry processing in FIG. 16 (Step S242). When it is determined that the PTID is not input (No in Step S241), the control unit 11 causes the process to return to Step S11.

FIG. 14 is a flowchart specifically illustrating the association processing of Step S12. First, the control unit 11 (electronic receipt specification information input section 111) determines whether or not the membership ID is input (Step S41). In this embodiment, the membership ID is input by the code reader unit 15 reading a barcode which is displayed on the display unit 73 of the portable terminal 7. When it is determined that the membership ID is input (Yes in Step S41), the control unit 11 stores the input membership ID in the RAM of the control unit 11 (Step S42).

When it is determined that the membership ID is not input (No in Step S41), the control unit 11 (privilege specification information input section 112) determines whether or not the PTID is input (Step S43). In the embodiment, the PTID is input by the code reader unit 15 reading a barcode which is printed on a point card held by a member. When it is determined that the PTID is input (Yes in Step S43), the control unit 11 stores the input PTID and a company code of a company which issues the point card of the PTID, in the RAM of the control unit 11 (Step S44).

After the membership ID and the PTID are input, a salesperson operates the transmission key 123. The control unit 11 determines whether or not the transmission key 123 is operated (Step S45). When it is determined to be operated (Yes in Step S45), the control unit 11 determines whether or not both of the membership ID and the PTID are stored in the RAM (Step S46).

When it is determined that both of the membership ID and the PTID are stored (Yes in Step S46), the control unit 11 (association information transmission section 114) correlates the membership ID and the PTID which are stored in the RAM and the company code which is stored in the POS terminal 1, and an association command for instructing association and storing with each other as a series of data and transmits a result of correlation to the electronic receipt management server 4 (Step S47). The control unit 11 determines whether or not information relating to association of the membership ID and the PTID is received from the electronic receipt management server 4 (Step S48).

The control unit 11 waits for reception of the information relating to association of the membership ID and the PTID (No in Step S48). When it is determined to be received (Yes in Step S48), the control unit 11 determines whether or not association of the membership ID and the PTID is completed at this time (Step S49). When it is determined to be completed (Yes in Step S49), the control unit 11 causes a message indicating completion of association to be displayed on the display unit 14 (Step S50). When it is determined that it is difficult to complete association at this time (No in Step S49), the control unit 11 causes a message indicating difficulties of association to be displayed along reasons of a case where association has been already performed or a case where there are difficulties in association (Step S51).

When it is determined that the PTID is not input in Step S43 (No in Step S43), when it is determined that the transmission key 123 is not operated in Step S45 (No in Step S45), and when it is determined that neither of the membership ID and the PTID are stored in the RAM in Step S46 (No in Step S46), the control unit 11 causes the process to return to Step S41.

Next, membership ID inquiry processing which is executed in Step S232 will be described with reference to FIG. 15. In FIG. 15, the control unit 11 causes the input membership ID to be stored (Step S2321). The control unit 11 (electronic receipt specification information transmission section 115) transmits the stored membership ID along with the company code stored in the POS terminal 1 to the store server 2 and inquires a PTID (Step S2322). Then, the control unit 11 (privilege specification information reception section 116) determines whether or not a PTID in association with the membership ID which is transmitted by the store server 2 is received (Step S2323).

When it is determined to be received (Yes in Step S2323), the control unit 11 causes the received PTID to be stored (Step S2324). The control unit 11 reads and stores a point value of the corresponding customer from the point portion 8a3 in the point master 8a of the headquarter server 3 based on the stored PTID (Step S2325). Specifically, the control unit 11 reads and stores the point value in correlation with the PTID which is stored in the point master 8a of the headquarter server 3, based on stored PTID. When it is determined that the PTID is not received (No in Step S2323), the control unit 11 causes the process to proceed on the assumption that there is no PTID in association with the membership ID (Step S2326).

Next, PTID inquiry processing which is executed in Step S242 will be described with reference to FIG. 16. In FIG. 16, the control unit 11 causes the input PTID to be stored (Step S2421). The control unit 11 (privilege specification information transmission section 118) transmits the stored PTID along with the company code stored in the POS terminal 1 to the store server 2 and inquires a membership ID (Step S2422). Then, the control unit 11 reads and stores the point value from the point portion 8a3 of the point master 8a in the headquarter server 3, based on stored PTID (Step S2423).

The control unit 11 (electronic receipt specification information reception section 119) determines whether or not a membership ID in association with the PTID which is transmitted by the store server 2 is received (Step S2424). When it is determined to be received (Yes in Step S2424), the control unit 11 causes the received membership ID to be stored (Step S2425). When it is determined that the membership ID is not received (No in Step S2424), the control unit 11 causes the process to proceed on the assumption that there is no membership ID in association with the PTID (Step S2426).

FIG. 17 is a flowchart specifically illustrating settlement processing which is executed by the POS terminal 1 in Step S32. In FIG. 17, the control unit 11 executes the settlement processing based on merchandise registration information which is obtained through execution of Step S22 (Step S61).

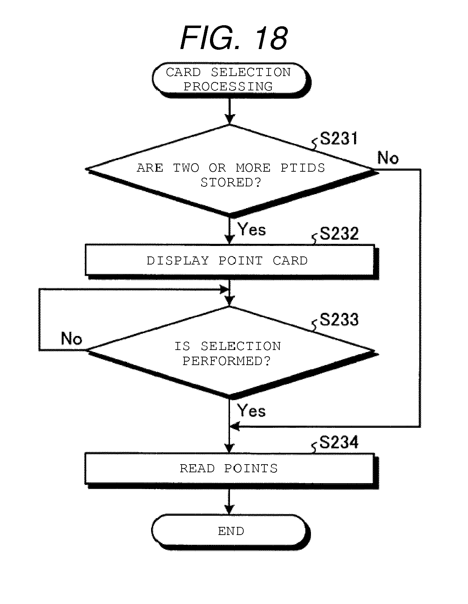

The control unit 11 determines whether or not the membership ID is stored in Step S2321 or Step S2425 (Step S62) . When it is determined that the membership ID is stored (Yes in Step S62), the control unit 11 determines whether or not the PTID is stored in Step S2324 or Step S2421 (Step S63). When it is determined to be stored (Yes in Step S63), the control unit 11 executes card selection processing in FIG. 18 (Step S64) .

Then, the control unit 11 reads the point value stored in Step S2325 based on the stored PTID (Step S65). The control unit 11 (privilege provision section 117) calculates the total point value by adding a point value at this time which is calculated in a settlement process of Step S61 and causes the total point value to be stored in the point portion 17c3 (Step S66). That is, the control unit 11 causes privilege to be provided to the reception destination of the privilege. The control unit 11 transmits information including the stored point value to the point master 8a of the headquarter server 3. The control unit 11 generates electronic receipt information based on the merchandise registration information, the settlement information, the point value, the membership ID, the company code, and the like (Step S67). The control unit 11 (electronic receipt information transmission section 1201) transmits the generated the electronic receipt information to the electronic receipt management server 4 (Step S68).

When it is determined that the membership ID is not stored in Step S62 (No in Step S62), the control unit 11 determines whether or not the PTID is stored (Step S71). When it is determined to be stored (Yes in Step S71), the control unit 11 reads the point value which is stored in Step S2423 (Step S73) .

The control unit 11 calculates the total point by adding points at this time which is calculated in the settlement process of Step S61 to the point value which is read in Step S72, and causes the total point to be stored in the point portion 17c3 (Step S81). That is, the control unit 11 causes privilege to be provided to the reception destination of the privilege. The control unit 11 transmits information including the stored point value to the point master 8a of the headquarter server 3 (Step S82). The control unit 11 causes the printing unit 13 to print information based on the settlement process of Step S61, and issues a receipt as illustrated in FIG. 9 (Step S83).

Next, the card selection processing which is executed in Step S64 of FIG. 17 will be described with reference to FIG. 18. In FIG. 18, the control unit 11 determines whether or not the number of the stored PTIDs is equal to or more than two (Step S231). For example, when the customer presents both of the membership ID and the point card which are displayed in the portable terminal 7 during a transaction of merchandise in POS terminal 1, the membership ID is input to the POS terminal 1, the PTID in association with the input membership ID is inquired and stored, and the stored PTID does not match with the PTID of a point card which is input and stored by operating a card, the control unit 11 determines that the number of the stored PTIDs is equal to or more than two. When the stored PTID matches with the PTID of the point card, the control unit 11 determines that the number of the stored PTIDs is one.

When it is determined that the input PTID does not match with the stored PTID, that is, the number of the input PTIDs is equal to or more than two (Yes in Step S231), the control unit 11 causes all point cards which are specified by the input PTID to be displayed on the display for an operator 14a and the display for a customer 14b (Step S232). The salesperson requests that the customer selects one of the point cards. The customer views the two types or more of point cards which are displayed on the display for a customer 14b, and then touches to select a point card which is wanted by the customer.

The control unit 11 determines whether or not one of the point cards is selected (Step S233) . The control unit 11 waits for selection (No in Step S233). When it is determined to be selected (Yes in Step S233), the control unit 11 selects the point card which is selected by the customer, and reads to store points from the point master 8a based on the PTID of specifying the selected point card (Step S234). Then, the control unit 11 executes a process of Step S65 or Step S73. When it is determined that the number of the input PTID is not equal to or more than two (that is, one) (No in Step S231), the control unit 11 reads the point value which is stored in Step S2325 or Step S2423 (Step S234).

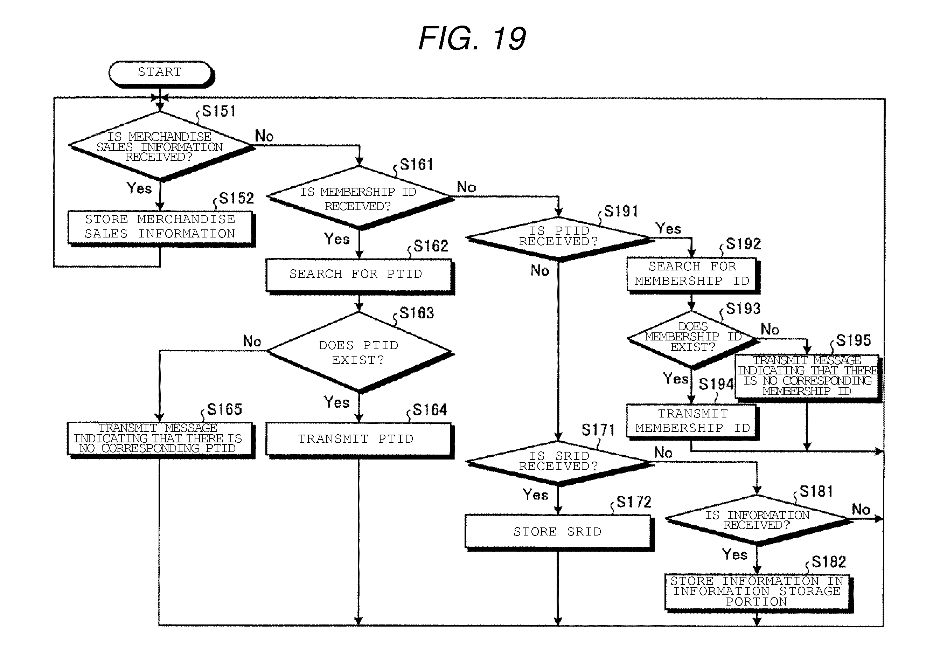

Next, control processing which is executed by the control unit 21 of the store server 2 will be described with reference to FIG. 19. In FIG. 19, the control unit 21 determines whether or not merchandise sales information is received from the POS terminal 1 (Step S151). When it is determined that the merchandise sales information is received (Yes in Step S151), the control unit 21 accumulates the received merchandise sales information in the merchandise sales information portion 25a and causes the merchandise sales information for the store P1 to be stored (Step S152).

When it is determined that the merchandise sales information is not received from the POS terminal 1 (No in Step S151), the control unit 21 determines whether or not the membership ID is received from the POS terminal 1 along the process of Step S2322 (Step S161). When it is determined to be received (Yes in Step S161), the control unit 21 investigates presence of a PTID in association with the membership ID, based on information which is stored in the point portion 25b and based on the membership ID and the company code which are received (Step S162). The control unit 21 determines whether or not there is the PTID in association with the membership ID (Step S163).

When it is determined that there is the PTID in association with the membership ID (Yes in Step S163), the control unit 21 transmits the PTID to the POS terminal 1 (Step S164). When it is determined that there is no PTID in association with the membership ID (No in Step S163), the control unit 21 transmits an error message indicating that there is no corresponding PTID, to the POS terminal 1 (Step S165).

When it is determined that the membership ID is not received (No in Step S161), the control unit 21 determines whether or not the PTID is received along the process of Step S2422 (Step S191). When it is determined to be received (Yes in Step S191), the control unit 21 investigates presence of a membership ID in association with the PTID based on information which is stored in the point portion 25b, and based on the membership ID and the company code which are received (Step S192). The control unit 21 determines whether or not there is the membership ID in association with the PTID (Step S193).

When it is determined that there is the membership ID in association with the PTID (Yes in Step S193), the control unit 21 transmits the membership ID to the POS terminal 1 (Step S194). When it is determined that there is no membership ID in association with the PTID (No in Step S193), the control unit 21 transmits an error message indicating that there is no corresponding membership ID, to the POS terminal 1 (Step S195).

When it is determined that the membership ID is not received from the POS terminal 1 along the process of Step S64 in Step S191 (No in Step S161), the control unit 21 determines whether or not an SRID obtained by associating the membership ID and the PTID with each other is received from the electronic receipt management server 4 through the headquarter server 3 (Step S171). When it is determined that the SRID is received (Yes in Step S171), the control unit 21 causes the received SRID to be stored in the point portion 25b (Step S172).

When it is determined that the SRID obtained by associating the membership ID and the PTID with each other is not received from the electronic receipt management server 4 through the headquarter server 3 (No in Step S171), the control unit 21 determines whether or not various information are received from the headquarter server 3 (Step S181). When it is determined that the various information are received (Yes in Step S181), the control unit 21 causes the received information to be stored in the information storage portion 25c (Step S182). After the process of Step S152, the process of Step S164, the process of Step S165, the process of Step S172, the process of Step S182, and the process of Step S195, the control unit 21 causes the process to return to Step S151. When it is determined that various information are not received in Step S181 (No in Step S181), the control unit 21 causes the process to return to Step S151.

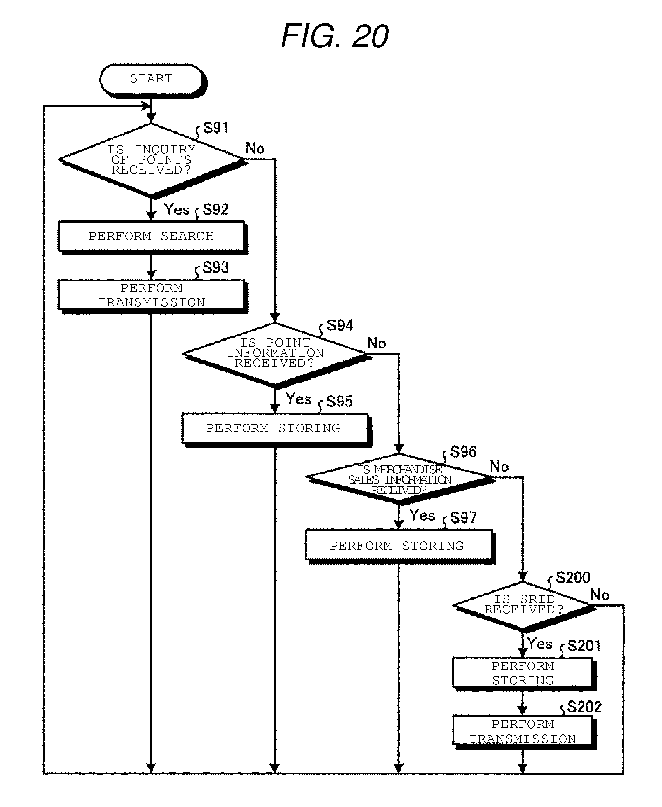

Next, a flow of point management processing will be described with reference to a flowchart illustrated in FIG. 20. The control unit 31 of the headquarter server 3 is operated with a control program 33c, whereby the point management processing is executed.

The control unit 31 of the headquarter server 3 determines whether or not an inquiry of the point value is received from the POS terminal 1, based on the input and stored PTID (Step S91). When it is determined to be received (Yes in Step S91), the storage unit 33 searches for the point master 8a and reads the point value which is stored in the point portion 8a3 and corresponds to the PTID (Step S92). Then, the read point value is transmitted to the POS terminal 1 which transmits the inquiry (Step S93).

When it is determined that the inquiry of the point value is not received from the POS terminal 1 (No in Step S91), the control unit 31 determines whether or not the point value is received from the POS terminal 1 (Step S94). When it is determined that the point value is received (Yes in Step S94), the control unit 31 causes the received point value to be stored in the point portion 8a3 in correlation with the PTID which is received at the same time (Step S95).

When it is determined that the point value is not received from the POS terminal 1 (No in Step S94), the control unit 31 determines whether or not merchandise sales information of merchandise which is subjected to settlement processing is received from the POS terminal 1 (Step S96). When it is determined to be received (Yes in Step S96), the control unit 31 causes the received merchandise sales information to be stored in the storage unit 33 (Step S97).

When it is determined that the merchandise sales information is not received from the POS terminal 1 in Step S96 (No in Step S96), the control unit 31 determines whether or not an SRID obtained by associating the membership ID and the PTID with each other is received from the electronic receipt management server 4 (Step S200). When it is determined that the SRID is received (Yes in Step S200), the control unit 31 causes the received SRID to be stored in the point master 8a (Step S201). Then, the control unit 31 transmits the stored SRID to the store server 2 (Step S202). The store server 2 stores the received SRID in the point portion 25b. The control unit 31 causes the process to return to Step S191. When it is determined that the SRID obtained by associating the membership ID and the PTID with each other is not received in Step S200 (No in Step S200), the control unit 31 causes the process to return to Step S91.

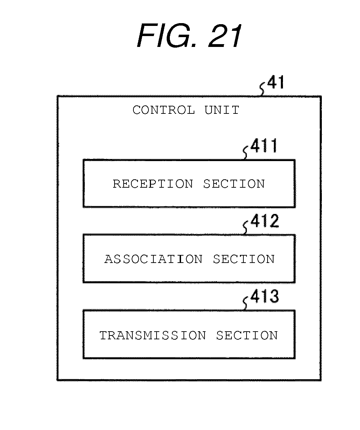

FIG. 21 is a functional block diagram of a process which is executed by the control unit 41 of the electronic receipt management server 4 being operated with the electronic receipt management program 43a. The control unit 41 reads and executes the electronic receipt management program 43a from the storage unit 43 and performs the reception section 411, the association section 412, the transmission section 413.

The reception section 411 has a function to receive company specification information (company code) for specifying a company, electronic receipt specification information (membership ID) for specifying a reception destination of the electronic receipt information which relates to merchandise sales, and privilege specification information (PTID) for specifying a reception destination of the privilege service which relates to merchandise sales, from the outside.

The association section 412 has a function to generate the association information (SRID) by associating the company specification information (company code), the electronic receipt specification information (membership ID), and the privilege specification information (PTID) which are received by the reception section 411 with each other, and to store the generated association information.

The transmission section 413 has a function to transmit the association information (SRID) to the company server (store server 2 or headquarter server 3) which relates to a company and is specified by the company specification information (company code).

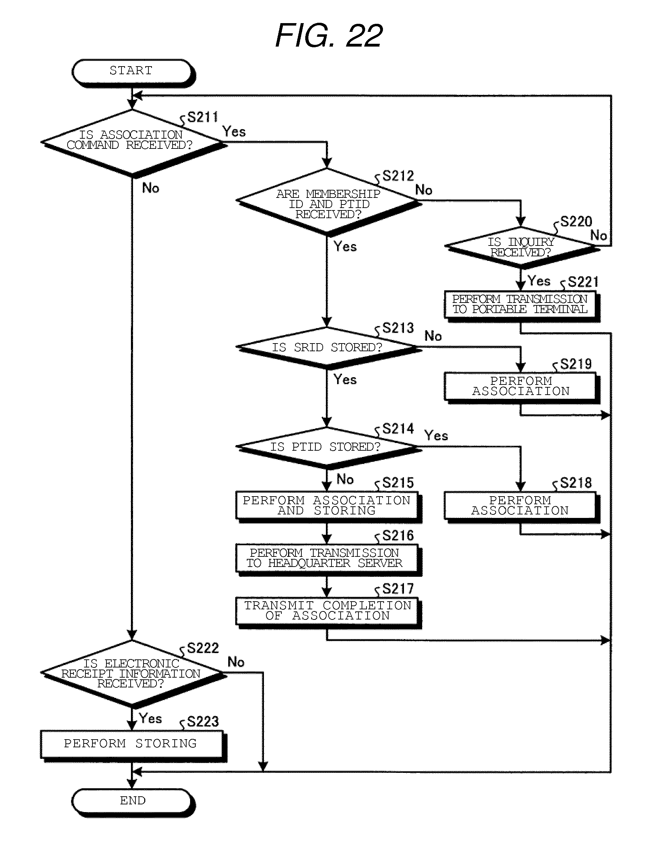

FIG. 22 is a flowchart illustrating control processing of the electronic receipt management server 4. In FIG. 22, the control unit 41 (reception section 411) determines whether or not an association command is received from the POS terminal 1 (Step S211). When it is determined to be received (Yes in Step S211), the control unit 41 determines whether or not both of the membership ID and the PTID, and the company code which are correlated with each other as a series of data are received along with the association command (Step S212).

When it is determined that the membership ID, the PTID, and the company code are received (Yes in Step S212), the control unit 41 determines whether or not an SRID including the received membership ID is stored in the electronic receipt management area 43a (Step S213). When it is determined that the SRID is stored (Yes in Step S213), the control unit 41 determines whether or not the PTID in association with the membership ID is stored in the corresponding optional flag portion 43a14 (Step S214).

When it is determined that the PTID is not stored (No in Step S214), the control unit 41 (association section 412) causes the PTID to be stored in the optional flag portion 43a14 of the corresponding SRID and performs association of the membership ID and the PTID (Step S215). At the same time, the control unit 41 causes the company code which is received in Step S212 and is associated as a series of data to be stored in the company code portion 43a13 of the stored SRID. The control unit 41 associates the membership ID, the PTID, and the company code with each other, and causes a result of association to be stored (Step S215).

Then, the control unit 41 (transmission section 413) transmits the SRID including the membership ID and the PTID which are associated with each other in Step S215 and stored, to the headquarter server 3 of a company which is specified by the company code which is stored in the company code portion 43a13 (Step S216). The headquarter server 3 which receives the SRID transmits the received SRID to store servers 2 of all stores P1 which are operated by the company. The control unit 41 transmits information indicating that association of the membership ID and the PTID is completed, to the POS terminal 1 (Step S217).

When it is determined that the PTID has been already stored (Yes in Step S214), the control unit 41 causes the received PTID to be stored in the optional flag portion of an SRID in which the PTID exists. The control unit 41 replaces the stored PTID with the new PTID which is received, and causes the new PTID to be stored in the electronic receipt management area 43a (Step S218). Owing to this manner, the membership ID and the new PTID are associated with each other.

When it is determined that the SRID including the received membership ID is not stored in an SRID portion of the electronic receipt management area 43a in Step S213 (No in Step S213), the control unit 41 associates the received membership ID and the new PTID with each other, and causes a result of association to be stored in the electronic receipt management area 43a (Step S219).

When it is determined that the membership ID, the PTID, and the company code are not received in Step S212 (No in Step S212), the control unit 41 determines whether or not an inquiry of electronic receipt information is received from the portable terminal 7 (Step S220). When it is determined that the inquiry is received (Yes in Step S220), the control unit 41 transmits the electronic receipt information to the portable terminal 7 which transmits the inquiry and causes the portable terminal 7 to be in a state where the electronic receipt information may be displayed (Step S221). When it is determined that the inquiry of the electronic receipt information is not received from the portable terminal 7 (No in Step S220), the control unit 41 causes the process to return to Step S101 and wait.

When it is determined that the association command is not received in Step S211 (No in Step S211), the control unit 41 determines whether or not electronic receipt information is received from the POS terminal 1 (Step S222).

When it is determined to be received (Yes in Step S222), the control unit 41 causes the received electronic receipt information to be stored in the electronic receipt management area 43a (Step S223).

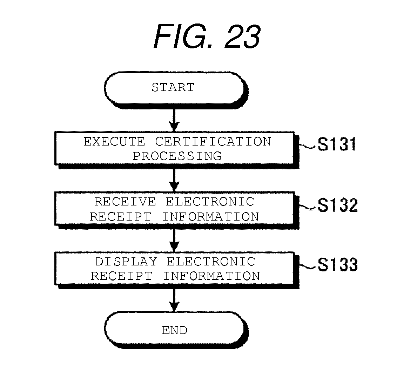

Next, a flow of electronic receipt reception processing and a flow of electronic receipt displaying processing will be described with reference to FIG. 23. The control unit 71 of the portable terminal 7 is operated with the electronic receipt correspondence program 75a, whereby the electronic receipt reception processing is executed. The control unit 71 is operated with the electronic receipt displaying program 75b, whereby the electronic receipt displaying processing is executed.

As illustrated in FIG. 23, first, the control unit 71 of the portable terminal 7 accesses the electronic receipt management server 4, and executes certification processing by inputting a membership ID and a password which are information of a reception destination (Step S131). Thus, the portable terminal 7 and the predetermined membership ID of a customer are correlated with each other.

After certification, the control unit 71 of the portable terminal 7 receives electronic receipt information which is stored and managed in the electronic receipt management area 43a of the electronic receipt management server 4 in a state of corresponding to the input membership ID, from the electronic receipt management server 4 (Step S132). When additional information is correlated with the electronic receipt information, the additional information is also received from the electronic receipt management server 4. The electronic receipt information may be received through an electronic mail by using a mail address which is stored in the membership master. Then, the control unit 71 causes the received electronic receipt information and the like to be displayed on the display unit 73 (Step S133), and ends the processing.

In this manner, in the embodiment, since a case where the membership ID and the PTID are input at the same time is determined, and the membership ID and the PTID are associated with each other and stored, it is possible to associate the membership ID and the PTID with each other and to store a result of association at the first time, for example.

In the embodiment, the SRID obtained by associating the membership ID and the PTID is output to the store server 2 from the electronic receipt management server 4 through the headquarter server 3 based on the input membership ID. Thus, for example, when the membership ID is input from the portable terminal 7, even though the point card is not presented, it is possible to apply points to the PTID which relates to the membership ID. Accordingly, it may be unnecessary to hold the point card.

In the embodiment, the SRID including the membership ID which is associated based on the input PTID is output to the store server 2 from the electronic receipt management server 4 through the headquarter server 3. Thus, if the point card is presented, even though the membership ID is not input from the portable terminal 7, it is possible to receive the electronic receipt information by using the SRID which includes the associated membership ID. Accordingly, it may be unnecessary to hold the portable terminal 7.

In this embodiment, since the SRID obtained by associating the membership ID and the PTID is stored in the store server 2, if the membership ID which is input from the POS terminal 1 is received, the PTID in association with the corresponding membership ID is transmitted to the POS terminal 1. For this reason, the customer may receive a privilege service of applying of points without the point card.

In this embodiment, since the membership ID and the PTID are associated with each other and stored in the store server 2, if the PTID which is input from the POS terminal 1 is received, the SRID including the associated membership ID is searched for so that the electronic receipt information may be displayed on a display unit of the corresponding portable terminal 7. For this reason, the customer may view the electronic receipt information without the portable terminal 7.

According to the embodiment, when the PTID in associated with the input membership ID does not match with the PTID which is input by reading the point card, the customer is caused to select one PTID among the PTIDs and the control unit 11 executes point processing for the selected PTID.

The POS terminal 1 may inquire the PTID or the membership ID to the headquarter server 3, not the store server 2. In this case, the control unit 11 of the POS terminal 1 transmits the membership ID to the headquarter server 3 and inquires the PTID. The control unit 31 of the headquarter server 3 searches for the PTID in association with the membership ID. The control unit 31 transmits the PTID in association with the membership ID to the POS terminal 1. The control unit 11 transmits the PTID to the headquarter server 3 and inquires the membership ID. The control unit 31 searches for the membership ID in association with the PTID. The control unit 31 transmits the membership ID in association with the PTID to the POS terminal 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, in the above embodiment, a configuration in which the membership ID and the like are input by using the code reader unit 15 is described. However, it is not limited thereto, and the membership ID and the like may be input by using other methods. Specifically, the POS terminal 1 and the portable terminal 7 may include near field wireless communication units such as an near field communication (NFC) and Bluetooth (registered trademark), and thus the membership ID and the like may be transmitted or received by using near field wireless communication. In this case, the portable terminal 7 holds the membership ID and the like in the storage unit 75, an IC tag (not illustrated), or the like.

In the above embodiment, the PTID for specifying a point card is described as an example. However, a card for applying privilege to a member in addition to the point card may be applied. In addition, a medium other than a card may be also applied.

In the above embodiment, the portable terminal 7 is used as an example of a customer terminal. However, a mounted type personal computer or a tablet terminal may be applied.

In the above embodiment, an example in which the membership ID and the like are input from the portable terminal 7 is described. However, it is not limited thereto, and the membership ID and the like may be input from a medium of enabling the membership ID to be held, such as an IC card and a magnetic card. When the IC card is used, the POS terminal 1 may include a reading and writing unit such as an IC card reader and writer. When the magnetic card is used, the POS terminal 1 may include a card reader and writer for a magnetic card, and the like.

In the above embodiment, an example in which the headquarter server 3 is provided in the headquarter P2 is described. However, it is not limited thereto, and the headquarter server 3 for a store may be provided in the store P1.

## Claims

1. A server comprising:
reception determination means that determines that an association signal is received from the outside, the association signal being for associating company specification information for specifying a company, electronic receipt specification information for specifying a reception destination of electronic receipt information relating to sales, and privilege specification information for specifying a reception destination of a privilege service relating to sales;
input means that performs an input of the company specification information, the electronic receipt specification information, and the privilege specification information; and
association means that generates and stores association information by associating the company specification information, the electronic receipt specification information, and the privilege specification information which are input by the input means, with each other when it is determined that the reception determination means receives the association signal.

2. The server according to claim 1, further comprising:
transmission means that transmits the association information to a company server relating to a company which is specified through the company specification information.

3. A sales data processing apparatus comprising:
electronic receipt specification information input means that inputs electronic receipt specification information for specifying a reception destination of electronic receipt information which relates to sales;
privilege specification information input means that inputs privilege specification information for specifying a reception destination of a privilege service which relates to sales;
storage means that stores company specification information for specifying a company which operates a store;
instruction means that instructs association; and
association information transmission means that transmits the electronic receipt specification information, the privilege specification information, the company specification information, and instruction information as a series of data to the server according to claim 1 or 2, when an instruction of association is received from the instruction means, the instruction information being for instructing association of the electronic receipt specification information, the privilege specification information, and the company specification information with each other.

4. The apparatus according to claim 3, further comprising:
electronic receipt specification information transmission means that transmits the electronic receipt specification information to a company server which stores the association information when the electronic receipt specification information is input by the electronic receipt specification information input means;
privilege specification information reception means that receives the privilege specification information from the company server; and
privilege provision means that provides the privilege service for a reception destination which is specified by the privilege specification information received by the privilege specification information reception means.

5. The apparatus according to claim 3 or 4, wherein the privilege specification information specifies an application destination of points which are applied depending on an amount of sales money.

6. The apparatus according to claim 3, further comprising:
privilege specification information transmission means that transmits the privilege specification information to a company server which stores the association information when the privilege specification information is input by the privilege specification information input means;
electronic receipt specification information reception means that receives the electronic receipt specification information from the company server; and
electronic receipt information transmission means that generates the electronic receipt information in association with the electronic receipt specification information which is received by the electronic receipt specification information reception means and transmits the generated electronic receipt information.

7. A program for controlling the server according to claim 1 or 2, by a computer, the program causing the computer to function as:
reception determination means that determines that an association signal is received from the outside, the association signal being for associating company specification information for specifying a company, electronic receipt specification information for specifying a reception destination of electronic receipt information relating to sales, and privilege specification information for specifying a reception destination of a privilege service relating to sales;
input means that performs an input of the company specification information, the electronic receipt specification information, and the privilege specification information; and
association means that generates and stores association information by associating the company specification information, the electronic receipt specification information, and the privilege specification information which are input by the input means, with each other when it is determined that the reception determination means receives the association signal.

8. A program for controlling a sales data processing apparatus according to any one of claims 3 to 6, by a computer, the program causing the computer to function as:
electronic receipt specification information input means that inputs electronic receipt specification information for specifying a reception destination of electronic receipt information which relates to sales;
privilege specification information input means that inputs privilege specification information for specifying a reception destination of a privilege service which relates to sales;
storage means that stores company specification information for specifying a company which operates a store;
instruction means that instructs association; and
association information transmission means that transmits the electronic receipt specification information, the privilege specification information, the company specification information, and instruction information as a series of data to a server when an instruction of association is received from the instruction means, the instruction information being for instructing association of the electronic receipt specification information, the privilege specification information, and the company specification information with each other.
